# EUROPEAN PATENT SPECIFICATION

(11) **EP 3 585 174 B1**
(45) Date of publication and mention of the grant of the patent: **03.11.2021**
(21) Application number: 18712643.8
(22) Date of filing: 21.02.2018
(51) Int. Cl.: A21C 9/06, A21C 11/04, A21C 11/06

(54) **MACHINE FOR MAKING FILLED PASTA**
MASCHINE ZUR HERSTELLUNG GEFÜLLTER TEIGWAREN
MACHINE POUR LA PRODUCTION DE PÂTES FARCIES

(30) Priority: 21.02.2017 IT 201700019105
(43) Date of publication of application: 01.01.2020
(73) Proprietor: Azionaria Costruzioni Macchine Automatiche A.C.M.A. S.p.A., 40131 Bologna (IT)
(72) Inventor: GUARESCHI, Paolo, 43124 PARMA (IT); BERTUZZI, Ivanoe, 40033 Casalecchio Di Reno (Bologna) (IT); GARGANELLI, Marco, 40137 BOLOGNA (IT); LENZI, Matteo, 40069 ZOLA PREDOSA (Bologna) (IT); RUGGERI, Riccardo, 40141 BOLOGNA (IT); VASSALLO, Enrica, 40133 Bologna (IT); BIONDI, Andrea, 40133 Bologna (IT)
(74) Representative: Casadei, Barbara
(86) International application number: PCT/IB2018/051064
(87) International publication number: WO 2018/154455

(56) References cited:
- EP-A1- 0 307 614
- EP-A1- 2 947 993
- EP-A2- 2 092 828
- WO-A1-97/30592
- WO-A2-2012/107236
- US-A- 2 714 861
- US-A- 4 941 402
- US-A- 5 010 807
- US-A- 5 590 589
- US-A1- 2003 024 360

## Description

### Technical field

This invention relates to a machine for making filled pasta.

The term "filled pasta" is used to mean a type of pasta consisting of one or more layers of dough stuffed with a filling of meat, fish, vegetable or cheese.

For example, ravioli is a filled pasta product of circular shape having, on each side of the dough layer, a respective bulge formed by the filling and also known as "belly" in the jargon of the trade.

To be able to supply it to large-scale distributors, filled pasta is made by automatic machines of known type.

### Background art

One prior art machine for making filled pasta comprises a pair of shaping rollers which advance the dough layers and, while doing so, shape the dough layers to allow them to receive the filling delivered by respective feed means and seal the dough layers to each other around the filling.

For example, a prior art machine is described into document EP2947993A1.

The shaping rollers produce a continuous strip of pasta where the dough layers are joined to each other around each of the fillings delivered. Downstream of the shaping rollers, the machine comprises a pair of cutting rollers configured to cut the strip of pasta feeding out of the shaping rollers to obtain filled pasta products separated from the continuous strip.

In this context, owing to the inevitable stresses the continuous strip of pasta is subjected to as it leaves the shaping rollers and is fed to the cutting rollers, it has been found that the strip of pasta is not cut according to the spacing defined by the shaping rollers, resulting in poor quality filled pasta products.

Patent document EP2092828 A2 illustrates and describes a machine for making filled pasta comprising a pair of shaping rollers which advance the dough layers and, while doing so, shape the dough layers to allow them to receive the filling delivered to them, seal the dough layers to each other around the filling and cut the dough layers around the filling to obtain the filled pasta product.

This solution has several drawbacks connected with the cutting of the dough layers, since a single pair of shaping and cutting rollers cannot be set to adapt to possible variations of thickness of the dough layers fed to it.

Documents WO9730592 A1, EP2947993 B1, US2003024360 A1, WO2012107236 A2, EP0307614 A1, US4941402 A, US5590589 A and US5010807 A disclose different apparatuses for making filled pasta products.

### Disclosure of the invention

The invention is defined by the claims. The aforementioned drawbacks are solved by an apparatus according to claim 1. The dependent claims define optional embodiments of the invention.

According to the invention, the shaping device allows keeping the step of cutting the filled pasta products in phase with the step of shaping preceding it, thereby optimizing the quality of the finished product compared to prior art.

### Brief description of drawings

Further features and advantages of the invention are more apparent in the description which follows, of embodiments according to the invention of a machine for making filled pasta as illustrated in the accompanying drawings, in which:

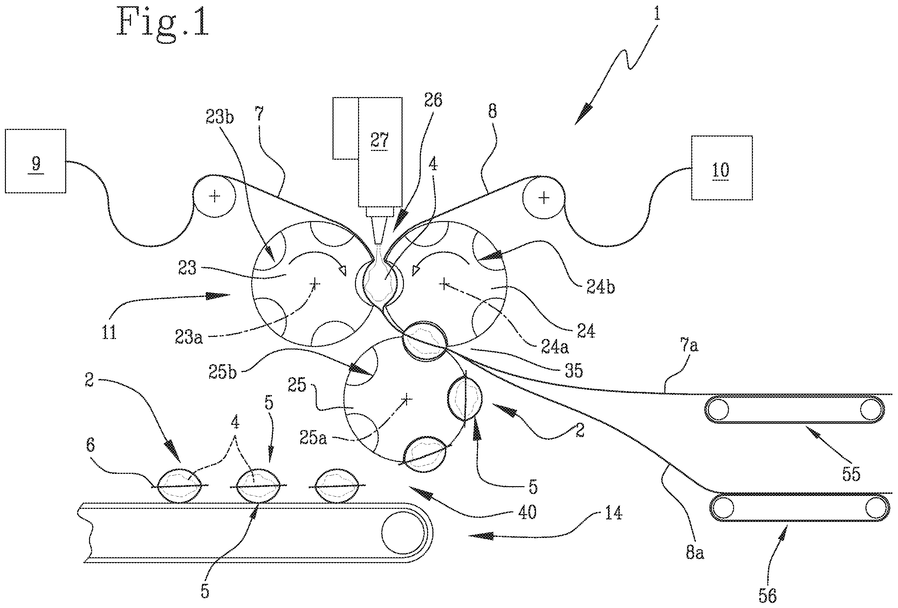

- Figure 1 shows a schematic front view of the machine for making filled pasta according to this invention;
- Figure 2 is a scaled-up, schematic front view of a detail from Figure 1, with some parts in cross section;
- Figure 3 is a schematic perspective view of a detail from Figures 1 and 2;

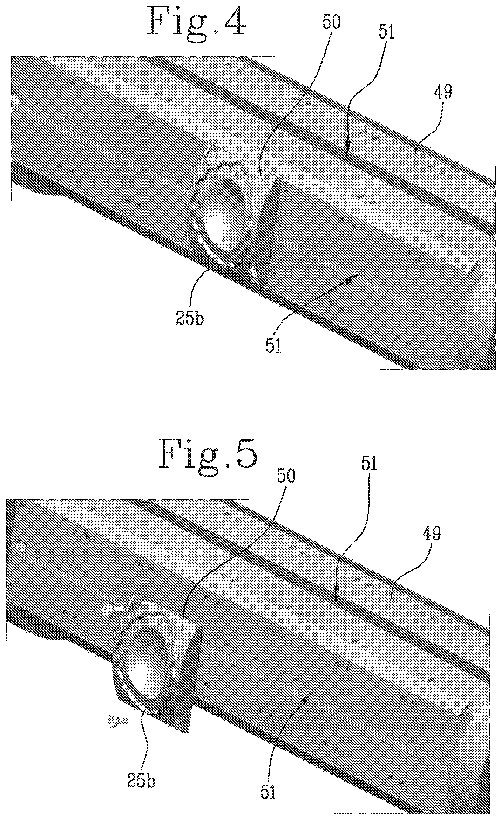

- Figures 4 and 5 are schematic perspective views of a detail from Figure 3;
- Figures 6 and 7 are schematic perspective views illustrating the mode of assembling and disassembling the shaping device of the machine according to this invention.

### Detailed description of preferred embodiments of the invention

The reference numeral 1 denotes a machine for making filled pasta products.

The filled pasta products 2 of this specification comprise two layers of pasta dough 7, 8, specifically a first dough layer 7 and a second dough layer 8 enclosing between them a filling 4, for example based on meat, fish, vegetables or cheese.

The dough layers 7, 8 of the filled pasta products 2 are superposed and sealed to each other along a common joining zone 6 in order to prevent the filling 4 from escaping.

The filled pasta products 2 of this specification have, on each side defined by the first and the second dough layer 7 and 8, a respective bulge 5, known as "belly" in the jargon of the trade, formed by the filling 4 under the respective dough layer 7 and 8.

The filled pasta product 2 of this specification is known by the term "ravioli". More specifically, the ravioli of the specification is disc-shaped and thus, the joining zone 6 where the dough layers 7 and 8 are sealed to each other has the shape of a circular crown 6 surrounding the filling 4. The machine 1 of this specification comprises a first feeding device 9 for feeding a first layer 7 of pasta dough and a second feeding device 10 for feeding a second layer 8 of pasta dough.

A shaping device 11 for shaping the filled pasta products 2 is located downstream of the first and second feeding devices 9 and 10, with reference to the direction of unrolling the first and second layers 7 and 8 of pasta dough.

The shaping device 11 is configured to advance the first and second layers 7 and 8 of pasta dough and, while it advances them, to shape the dough layers 7 and 8 in such a way that they can receive the filling 4, and to press them against each other in order to define the joining zone 6 where the first and second dough layers 7 and 8 are sealed to each other around the filling 4.

The shaping device 11 is configured to cut the first and second dough layers 7 and 8, individually separating each filled pasta product 2 from the dough layers 7 and 8 as they advance in the device 11.

Downstream of the shaping device 11, the filled pasta products 2 are transported by a conveyor line 14 for further processing in other production machines.

The shaping device 11 of the machine 1 comprises a first and a second roller 23 and 24 for advancing and shaping the first and the second layer 7 and 8, respectively.

The first and second rollers 23 and 24 rotate about respective axes of rotation 23a and 24a.

The axes of rotation 23a and 24a of the rollers 23 are 24 are parallel to each other.

The first and the second roller 23 and 24 are disposed to face and be tangent to each other at a coupling station 26 for coupling the first and the second layer 7, 8 around the respective filling 4.

The first and the second roller 23 and 24 of the shaping device 11 each have on the peripheral surface respective moulds 23b and 24b which are configured to shape the respective dough layer 7, 8 so that they can receive the filling 4.

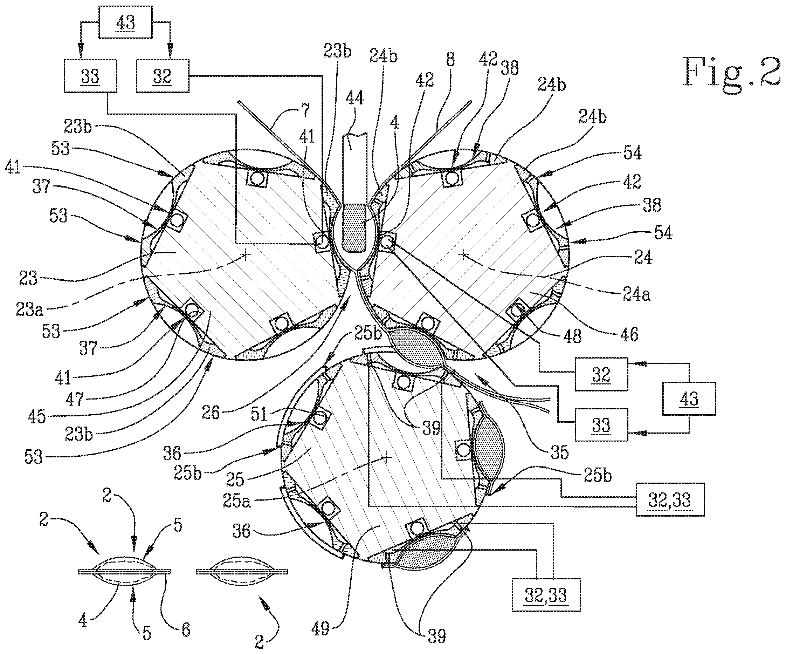

As illustrated in Figure 2, the moulds 23b and 24b of the first and the second roller 23, and 24 comprise respective hollows 37, 38, concave relative to the respective peripheral outside surface of the first and second rollers 23 and 24, for receiving the respective layers of dough 7 and 8. The concave peripheral surface of the hollows 37 and 38 of the first and second rollers 23 and 24, which act in conjunction at the coupling station 26 for coupling the first and the second layer 7 and 8, allow shaping a respective bulge 5 of the filled pasta 2.

The moulds 23b and 24b of the first and the second roller 23, and 24 comprise respective pressing zones 53 and 54 surrounding the respective hollows 37 and 38.

The pressing zones 53 and 54 of the respective moulds 23b and 24b of the first and the second roller 23, and 24 acting in conjunction at the coupling station 26 allow joining the first and the second layer 7 and 8 to each other to define the pasta dough joining zone 6 on the product 2.

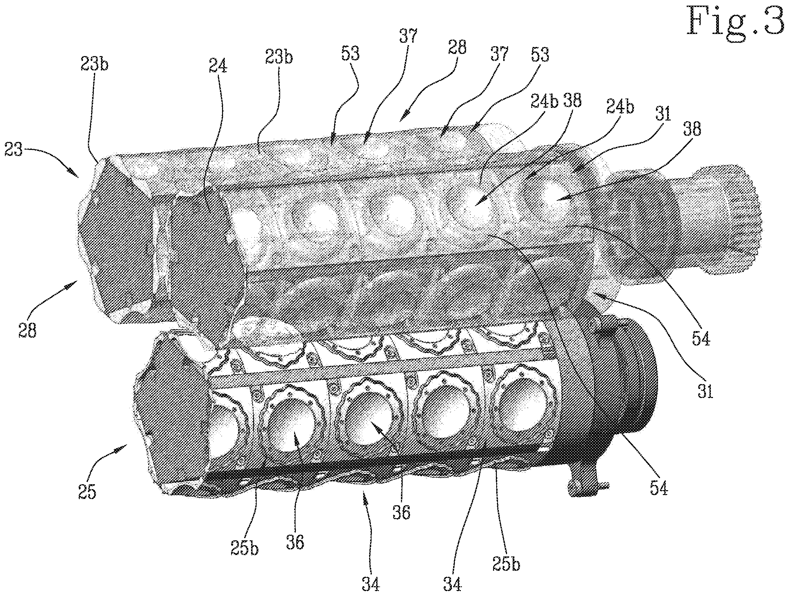

The moulds 23b on the first roller 23 are disposed along respective rows 28, each extending along a direction parallel to the axis of rotation 23a of the first roller 23, as better illustrated in Figure 3.

With reference to the outside surface of the first roller 23, the rows 28 of moulds 23b are equispaced from each other.

The moulds 24b on the second roller 24 are disposed along respective rows 31, each extending along a direction parallel to the axis of rotation 24b of the second roller 24.

With reference to the outside surface of the second roller 24, the rows 31 of moulds 24b are equispaced from each other.

The shaping device 11 comprises dispensing means 27 for delivering the filling 4 to the first and second layers 7 and 8 as the first and second rollers 23 and 24 advance them to the coupling station 26.

The dispensing means 27 for delivering the filling 4 are disposed between the first and the second roller 23 and 24.

More specifically, the dispensing means 27 for delivering the filling 4 are configured to feed the filling 4 to the moulds 23b and 24b of the first and second rollers 23 and 24 which face each other at the coupling station 26 for coupling the first and second layers 7 and 8.

The dispensing means 27 comprise a plurality of dispensing nozzles 44 for delivering the filling 4.

Each nozzle 44 is configured to deliver the filling 4 to a respective pair of moulds 23b and 24b of the first and second rollers 23 and 24 which face each other at the coupling station 26 for coupling the first and second layers 7 and 8.

The number of nozzles 44 of the dispensing means 27 is equal to the number of moulds 23b and 24b disposed along each row 28, 31 on the first and second rollers 23 and 24.

Each nozzle 44 is configured to move towards and away from the respective pair of moulds 23b and 24b of the first and second rollers 23 and 24 which face each other at the coupling station 26 for coupling the first and second layers 7 and 8.

The shaping device 11 of the machine 1 comprises suction means 32 which are in fluid communication with the first and the second roller 23 and 24.

More specifically, the suction means 32 are in fluid communication with the hollows 37 and 38 for receiving the first and second layers 7 and 8 on the first and second rollers 23 and 24.

The receiving hollows 37 of the first roller 23 have respective air inlet mouths 41 in fluid communication with the suction means 32.

The receiving hollows 38 of the second roller 24 have respective air inlet mouths 42 in fluid communication with the suction means 32.

More specifically, the suction means 32 are configured to operate at least at the moulds 23b and 24b of the first and second rollers 23 and 24 in transit through the coupling station 26 for coupling the first and second layers 7 and 8 around the filling 4.

Advantageously, the suction means 32 cause the first and the second layer 7 and 8 to adhere to the surface of the respective moulds 23b and 24b, adopting the shape thereof so as to make it easier for them to receive the filling 4.

The shaping device 11 of the machine 1 comprises blowing means 33. More specifically, the blowing means 33 are in fluid communication with the hollows 37 and 38 for receiving the first and second layers 7 and 8 on the first and second rollers 23 and 24.

The mouths 41 of the receiving hollows 37 of the first roller 23 are in fluid communication with the blowing means 33 to let air out.

The mouths 42 of the receiving hollows 38 of the second roller 24 are in fluid communication with the blowing means 33 to let air out.

Advantageously, the blowing means 33 cause the first and the second layer 7 and 8 to come away from the surface of the respective moulds 23b and 24b and to be wrapped around the respective filling 4, facilitating its detachment from the dispensing means 27.

The machine 1 comprises a control unit 43 configured to control the switching on and off of the suction means 32.

The control unit 43 is configured to control the switching on and off of the blowing means 33.

The control unit 43 is configured to switch on the suction means 32 during transit of the moulds 23b and 24b of the first and second rollers 23 and 24 in the coupling station 26.

In a first operating mode, the control unit 43 is configured to switch on the suction means 32 before the dispensing means 27 release the filling 4 into the moulds 23b and 24b of the first and second rollers 23 and 24 in transit in the coupling station 26.

That way, the first and the second layer 7 and 8 are shaped by the respective moulds 23b and 24b to receive the filling 4.

In this operating mode, the control unit 43 is configured to switch off the suction means 32 once the dispensing means 27 have released the filling 4 into the respective moulds 23b and 24b.

If necessary, after the suctions means 32 have been switched off, the control unit 43 switches on the blowing means 33 in such a way that the first and second layers 7 and 8 come away to the surface of the respective moulds 23b and 24b and are wrapped around the respective filling 4, facilitating its detachment from the dispensing means 27.

In a second operating mode, the control unit 43 is configured to switch on the suction means 32 at the same time as the dispensing means 27 release the filling 4 into the moulds 23b and 24b of the first and second rollers 23 and 24 in transit in the coupling station 26.

This operating mode allows creating a light vacuum in the hollows 37 and 38 of the moulds 23b and 24b to facilitate delivery of the filling 4 from the dispensing means 27.

The control unit 43 is configured to be programmed by an operator to set the operating mode as a function of the physical properties of the filling 4.

The shaping device 11 comprises a cutting roller 25 acting in conjunction with one of either the first roller 23 or the second roller 24, specifically with the second roller 24, in order to individually separate each product 2 from the first and the second layer 7 and 8 of dough.

The cutting roller 25 and the roller 24 of the shaping device it acts in conjunction with, in particular the second roller 24, are tangent to each other at a cutting station 35 where each product 2 is separated from the first and the second layer 7 and 8 of dough.

The cutting roller 25 releases the filled pasta 2 onto the conveyor line 14 at a release station 40.

The cutting roller 25 rotates about its axis of rotation 25a.

The axis of rotation 25a of the cutting roller 25 is parallel to the axes of rotation 23a and 24a of the advancing and shaping rollers 23, 24.

On the peripheral surface of it, the cutting roller 25 has respective cutting edges 25b shaped to cut the dough layers 7, 8 at their sealing zone 6.

The cutting edges 25 are shaped to match the moulds 24b of the roller 24 of the shaping device 11 it acts in conjunction with, relative in particular to the moulds 24b of the second roller 24, in such a way as to oppose them along the perimeter of the pressing zone 54 of the respective mould 24b. That way, the cutting edge 25b of the cutting roller 25 operates at the periphery of the sealed pasta zone 6 of the product 2 without cutting other portions of the first and second layers 7 and 8 outside the mould 24b of the second roller 24.

Advantageously, downstream of the cutting station 35, the offcuts of the first layer 7 and the offcuts of the second layer 8 can be advanced separately because they are not sealed to each other.

Advantageously, the possibility of recovering the offcuts 7a of the first dough layer 7 separately from the offcuts 8a of the second dough layer 8 allows using layers 7 and 8 made of dough having different properties, such as doughs of different colours, for example.

Downstream of the cutting roller 25, the machine 1 comprises a conveying line 55 for the offcuts 7a of the first dough layer 7 and a separate conveying line 56 for the offcuts 8a of the second dough layer 8.

The cutting edges 25b of the cutting roller 25 are disposed along respective rows 34, each extending along a direction parallel to the axis of rotation 25a of the cutting roller 25.

With reference to the outside surface of the cutting roller 25, the rows 34 of cutting edges 25b are equispaced from each other.

The cutting roller 25 of the machine 1 according to this invention has, on the peripheral outside surface of it, a plurality of hollows 36, each of which is adapted to receive a respective product 2.

Each hollow 36 is surrounded by a respective shaped cutting edge 25b.

Each hollow 36 of the cutting roller 25 is concave relative to the peripheral outside surface of the cutting roller 25 so that the surface of the hollow 36 can receive the bulge 5 of the filled pasta 2, defined by the filling 4 under the dough layer 7, 8.

Each hollow 36 of the cutting roller 25 has at least one air suction or blowing mouth 39 configured to be in fluid communication with the suction means 32 and with the blowing means 33 as a function of the position of the hollow 32 during the rotation of the cutting roller 25.

At the cutting station 35, the mouth 39 of each hollow 36 of the cutting roller 25 is in fluid communication with the suction means 32 so that each hollow 36 receives the respective product 2, separated from the first and second layer 7 and 8, and then releases it onto the conveyor line 14. During rotation of the cutting roller 25 about its axis of rotation 25a from the cutting station 35 to the release station 40, each hollow 36 of the cutting roller 25 holds the respective filled pasta product 2 by suction thanks to the fluid connection between the respective mouth 39 and the suction means 32.

At the release station 40, the mouth 39 of each hollow 36 of the cutting roller 25 is in fluid communication with the blowing means 33 so as to expel the product 2 from the hollow 36.

Advantageously, the cutting roller 25 of the machine 1 allows handling the product 2 accurately and precisely in terms of its position and centring, thus increasing the quality of the filled pasta 2 made by the machine 1.

In the machine 1 according to this invention, in order to allow rapid changeover and reduce down time of the machine 1, the first roller 23 and the second roller 24 comprise a respective supporting roller 45, 46 on which the moulds 23b and 24b of the first roller 23 and second roller 24 can be mounted.

In other words, the moulds 23b and 24b of the first roller 23 and second roller 24 are configured to be assembled and disassembled to and from the supporting roller 45 and 46 of the first and the second roller 23 and 24. Advantageously, the possibility of assembling and disassembling the moulds 23b and 24b of the first roller 23 and second roller 24 allows the supporting rollers 45 and 46 of the first and the second roller 23 and 24 to be used for two or more sizes of filled pasta 2.

The supporting roller 45 of the first roller 23 has a plurality of grooves 47 defining means for conveying air out of the suction means 32 or out of the blowing means 33.

With reference to the supporting roller 45 of the first roller 23, each groove 47 extends in a direction parallel to the axis of rotation 23a of the first roller 23 and is configured to convey the air to a respective row 28 of moulds 23b.

The mouths 41 of the hollows 37 of the first roller 23, once assembled to the supporting roller 45, are in fluid communication with the respective groove 47.

Thus, the supporting roller 45 of the first roller 23 has a plurality of grooves 47 which are equispaced from each other along the peripheral surface of the supporting roller 45 of the first roller 23.

The supporting roller 46 of the second roller 24 has a plurality of grooves 48 defining means for conveying air out of the suction means 32 or out of the blowing means 33.

With reference to the supporting roller 46 of the second roller 24, each groove 48 extends in a direction parallel to the axis of rotation 24a of the second roller 24 and is configured to convey the air to a respective row 31 of moulds 24b.

The mouths 42 of the hollows 38 of the second roller 24, once assembled to the moulds 24b on the supporting roller 46, are in fluid communication with the respective groove 48.

Thus, the supporting roller 46 of the second roller 24 has a plurality of grooves 48 which are equispaced from each other along the peripheral surface of the supporting roller 46 of the second roller 24. Advantageously, the grooves 47, 48 made on the respective supporting roller make it easier to clean the first and second rollers 23 and 24, thus limiting maintenance times and costs.

In the machine 1 according to this invention, in order to allow rapid changeover and reduce down time of the machine 1, the cutting roller 25 comprises a respective supporting roller 49 on which the cutting edges 25b can be mounted.

Each of the cutting edges 25b of the cutting roller 25 is supported by a respective block 50 configured to be assembled and disassembled to and from the supporting roller 49 of the cutting roller 25.

Advantageously, the possibility of assembling and disassembling the blocks 50 supporting the cutting edges 25b of the cutting roller 25 allows the supporting roller 49 of the cutting roller 25 to be used for two or more sizes of filled pasta 2.

Advantageously, the possibility of assembling and disassembling the blocks 50 supporting the cutting edges 25b of the cutting roller 25 allows replacing worn, faulty or chipped cutting edges 25b without having to replace the entire cutting roller 25.

The supporting roller 49 of the cutting roller 25 has a plurality of grooves 51 defining means for conveying air out of the suction means 32 or out of the blowing means 33.

With reference to the supporting roller 50 of the cutting roller 25, each groove 51 extends in a direction parallel to the axis of rotation 25a of the cutting roller 25 and is configured to convey the air to a respective row 34 of moulds 36.

The mouths 39 of the hollows 36 of the cutting roller 25, once assembled to the supporting roller 49, are in fluid communication with the respective groove 51.

Thus, the supporting roller 49 of the cutting roller 25 has a plurality of grooves 51 which are equispaced from each other along the peripheral surface of the supporting roller 49 of the cutting roller 25. Advantageously, the grooves 51 made on the supporting roller 49 of the cutting roller 25 facilitate cleaning operations, thus limiting maintenance times and costs.

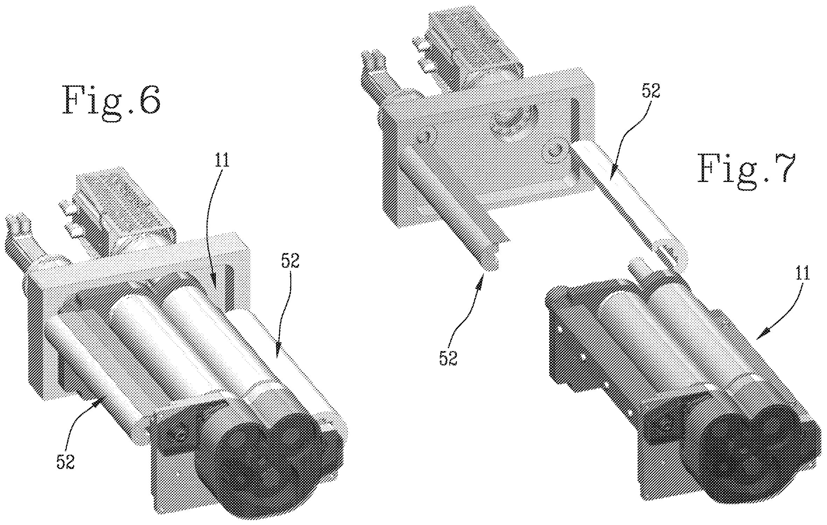

In order to facilitate operations for the maintenance and cleaning of the shaping device 11, the shaping device is extractable from the supporting frame 52 it is mounted on, as illustrated in Figures 6 and 7.

## Claims

1. A machine for making filled pasta products, comprising a first feeding device (9) for feeding a first layer (7) of pasta dough and a second feeding device (10) for feeding a second layer (8) of pasta dough; a shaping device (11) for shaping the filled pasta products (2), located downstream of the first and second feeding devices (9, 10), with reference to the direction of unrolling the first and second layers (7, 8) of pasta dough; the shaping device (11) being configured to advance the first and second layers (7, 8) of pasta dough and being also configured, while it advances them, to shape the first and second layers (7, 8) in such a way as to receive a respective filling (4) and to join the first and second layers (7, 8) of dough in a respective joining zone (6); the shaping device (11) being configured to cut the first and second layers (7, 8), individually separating each product (2) from the first and second layers (7, 8) of dough; the shaping device (11) comprising a first and a second advancing and shaping roller (23, 24) for the first and the second layer (7, 8), respectively, disposed to face and be tangent to each other at a coupling station (26) for coupling the first and the second layer (7, 8) around a respective filling (4);
wherein the first and second rollers (23, 24) of the shaping device (11) each have on the peripheral surface respective moulds (23b, 24b) for shaping the respective first and second layer of dough (7, 8) so as to be able to receive the filling (4); the moulds (23b, 24b) of the first and second roller (23, 24) comprise respective hollows (37, 38) which are shaped to receive the respective layers of dough (7, 8) and respective pressing zones (53, 54) for pressing the respective first and second layer of dough (7, 8) and surrounding the respective hollow (37, 38); **characterised in that** the shaping device (11) further comprises
a cutting roller (25) acting in conjunction with one of either the first or the second roller (23, 24), in particular with the second roller (24); the cutting roller (25) and the roller (24) of the shaping device (11) it acts in conjunction with, in particular the second roller (24), being tangent to each other at a cutting station (35) where each product (2) is separated from the first and the second layer (7, 8) of dough;
wherein the cutting roller (25) has on its peripheral surface respective cutting edges (25b) shaped to cut the dough layers (7, 8) at their sealing zone (6);
wherein the cutting edges (25b) are shaped to match the moulds (24b) of the roller (24) of the shaping device (11) it acts in conjunction with, relative in particular to the moulds (24b) of the second roller (24), in such a way as to oppose them along the perimeter of the pressing zone (54) of the respective mould (24b).

2. The machine according to independent claim 1, **characterized in that** the shaping device (11) comprises suction means (32) and blowing means (33) in fluid communication with the cutting roller (25); the cutting roller (25) having on its peripheral surface a plurality of hollows (36) for retaining a respective product (2) and being provided with at least one air suction or blowing mouth (39) configured to be in fluid communication with the suction means (32) and with the blowing means (33) as a function of the position of the hollow (32) during the rotation of the cutting roller (25) about its axis (25a).

3. The machine according to claim 2, **characterized in that** the cutting roller (25) comprises a supporting roller (49) having on its peripheral surface respective blocks (50) configured to be assembled to and disassembled from the supporting roller (49);
each block (50) is provided with the aforementioned hollow (32) for retaining a respective product (2) and comprises a respective cutter (25b) surrounding the hollow (32), shaped to cut the first and second layers of dough (7, 8) at the cutting station (35).

4. The machine according to claim 3, **characterized in that** the supporting roller (49) of the cutting roller (25) has a plurality of grooves (51) defining means for conveying air into the suction means (32) or out of the blowing means (33); the hollow (32) of each block (50) having a respective air suction or blowing mouth (39) configured to be in fluid communication with the respective groove (51) which conveys air into the suction means (32) or out of the blowing means (33) as a function of the position of the hollow (32) during the rotation of the cutting roller (25) about its axis of rotation (25a).

5. The machine according to any one of the preceding claims, **characterized in that** the shaping device (11) comprises suction means (32) and blowing means (33) in fluid communication with the first and the second roller (23, 24); the receiving hollows (37) of the first roller (23) have respective air inlet or blowing mouths (41) in fluid communication with the suction means (32) and with the blowing means (33); the receiving hollows (38) of the second roller (24) have respective air inlet or blowing mouths (42) in fluid communication with the suction means (32) and with the blowing means (33).

6. The machine according to claim 5, **characterized in that** it comprises a control unit (43) configured to control the switching on and off of the suction means (32) and to control the switching on and off of the blowing means (33); the control unit (43) being configured to switch on the suction means (32) or the blowing means (33) during transit of the moulds (23b, 24b) of the first and second rollers (23, 24) in the coupling station (26).

7. The machine according to claim 6, **characterized in that** the control unit (43) is configured to switch on the suction means (32) before the filling (4) is released into the moulds (23b, 24b) of the first and second rollers (23, 24) in transit in the coupling station (26); the control unit (43) is configured to switch off the suction means (32) once the filling (4) has been released into the moulds (23b, 24b).

8. The machine according to claim 7, **characterized in that** the control unit (43) is configured to switch on the blowing means (33) when the suction means (32) are switched off.

9. The machine according to claim 6, **characterized in that** the control unit (43) is configured to switch on the suction means (32) at the same time as the filling (4) is released into the moulds (23b, 24b) of the first and second rollers (23, 24) in transit in the coupling station (26).

10. The machine according to one of the preceding claims, **characterized in that** the first roller (23) and the second roller (24) each comprise a respective supporting roller (45, 46) having on its peripheral surface the moulds (23b, 24b) configured to be assembled to and disassembled from the respective supporting roller (45, 46).

11. The machine according to one of the preceding claims, **characterized in that** the supporting roller (45) of the first roller (23) has a plurality of grooves (47) defining means for conveying air into the suction means (32) or out of the blowing means (33); the hollow (37) of each mould (23b) having a respective air suction or blowing mouth (41) configured to be in fluid communication with the respective groove (47) which conveys air into the suction means (32) or out of the blowing means (33).

12. The machine according to one of the preceding claims, **characterized in that** the supporting roller (46) of the second roller (24) has a plurality of grooves (48) defining means for conveying air into the suction means (32) or out of the blowing means (33); the hollow (38) of each mould (24b) having a respective air suction or blowing mouth (42) configured to be in fluid communication with the respective groove (48) which conveys air into the suction means (32) or out of the blowing means (33).

13. The machine according to one of the preceding claims, **characterized in that** the perimeter portion of the pressing zone (53, 54) of the mould (23b, 24b) defines the anvil for the respective cutter (25b) which acts in conjunction therewith.

14. The machine according to one of the preceding claims, **characterized in that** it comprises, downstream of the cutting roller (25), a conveying line (55) for the offcuts (7a) of the first layer of dough (7) and a conveying line (56) for the offcuts (8a) of the second layer of dough (8); the offcuts (7a) of the first layer (7) advancing separately from the offcuts (8a) of the second layer (8).

## Patentansprüche

1. Maschine zur Herstellung gefüllter Teigwarenprodukte, umfassend
eine erste Zuführvorrichtung (9) zum Zuführen einer ersten Schicht (7) aus Nudelteig und eine zweite Zuführvorrichtung (10) zum Zuführen einer zweiten Schicht (8) aus Nudelteig;
eine Formvorrichtung (11) zum Formen der gefüllten Teigwarenprodukte (2), die sich stromabwärts der ersten und der zweiten Zuführvorrichtung (9, 10) in Bezug auf die Abrollrichtung der ersten und der zweiten Nudelteigschicht (7, 8) befindet; wobei die Formvorrichtung (11) so ausgebildet ist, dass sie die erste und die zweite Schicht (7, 8) aus Nudelteig vorschiebt und auch so ausgebildet ist, dass während sie diese vorschiebt, die erste und die zweite Schicht (7, 8) formt, um eine jeweilige Füllung (4) aufzunehmen und die erste und die zweite Teigschicht (7, 8) in einer jeweiligen Zusammenfügungszone (6) zusammenzufügen; wobei die Formvorrichtung (11) so ausgebildet ist, dass sie die erste und die zweite Schicht (7, 8) schneidet, wobei ein jedes Produkt (2) einzeln von der ersten und der zweiten Teigschicht (7, 8) getrennt wird; wobei die Formvorrichtung (11) eine erste und eine zweite Vorschub- und Formrolle (23, 24) für die erste oder die zweite Schicht (7, 8) umfasst, die jeweils an einer Kupplungsstation (26) zum Koppeln der ersten und der zweiten Schicht (7, 8) um eine jeweilige Füllung (4) einander zugewandt und zueinander tangential angeordnet sind;
wobei die erste und die zweite Rolle (23, 24) der Formvorrichtung (11) jeweils auf der Umfangsfläche jeweilige Formen (23b, 24b) zum Formen der jeweiligen ersten und zweiten Teigschicht (7, 8) aufweisen, um in der Lage zu sein, die Füllung (4) aufzunehmen; die Formen (23b, 24b) der ersten und der zweiten Rolle (23, 24) umfassen jeweilige Vertiefungen (37, 38), die so geformt sind, dass sie die jeweiligen Teigschichten (7, 8) und jeweilige Presszonen (53, 54) zum Pressen der jeweiligen ersten und zweiten Teigschicht (7, 8) und zum Umgeben der jeweiligen Vertiefung (37, 38) aufnehmen;
**dadurch gekennzeichnet, dass** die Formvorrichtung (11) ferner umfasst:
eine Schneidrolle (25), die entweder mit der ersten oder der zweiten Rolle (23, 24), insbesondere mit der zweiten Rolle (24), zusammenwirkt; wobei die Schneidrolle (25) und die Rolle (24) der Formvorrichtung (11), mit der sie zusammenwirkt, insbesondere die zweite Rolle (24), an einer Schneidstation (35) zueinander tangential sind, wo ein jedes Produkt (2) von der ersten und der zweiten Teigschicht (7, 8) getrennt wird;
wobei die Schneidrolle (25) auf ihrer Umfangsfläche jeweilige Schneidkanten (25b) aufweist, die so geformt sind, dass sie die Teigschichten (7, 8) an ihrer Siegelzone (6) schneiden;
wobei die Schneidkanten (25b) passend zu den Formen (24b) der Rolle (24) der Formvorrichtung (11) geformt sind, mit der sie zusammenwirkt, insbesondere relativ zu den Formen (24b) der zweiten Rolle (24), so dass sie ihnen entlang des Umfangs der Presszone (54) der jeweiligen Form (24b) gegenüberwirken.

2. Maschine nach dem unabhängigen Anspruch 1, **dadurch gekennzeichnet, dass** die Formvorrichtung (11) Saugmittel (32) und Blasmittel (33) in Fluidkommunikation mit der Schneidrolle (25) umfasst; wobei die Schneidrolle (25) auf ihrer Umfangsfläche eine Vielzahl an Vertiefungen (36) zum Zurückhalten eines jeweiligen Produkts (2) aufweist und mit mindestens einer Luftansaug- oder Blasöffnung (39) versehen ist, die so ausgebildet sind, dass sie in Fluidkommunikation mit den Saugmitteln (32) und mit den Blasmitteln (33) als Funktion der Position der Vertiefung (32) während der Drehung der Schneidrolle (25) um ihre Achse (25a) steht.

3. Maschine nach Anspruch 2, **dadurch gekennzeichnet, dass** die Schneidrolle (25) eine Stützrolle (49) umfasst, die auf ihrer Umfangsfläche jeweilige Blöcke (50) aufweist, die ausgebildet sind, um an der Stützrolle (49) montiert und von dieser demontiert zu werden;
ein jeder Block (50) ist mit der zuvor erwähnten Vertiefung (32) zum Zurückhalten eines jeweiligen Produkts (2) versehen und umfasst einen jeweiligen Schneider (25b), der die Vertiefung (32) umgibt, die so geformt ist, dass sie die erste und die zweite Teigschicht (7, 8) an der Schneidestation (35) schneidet.

4. Maschine nach Anspruch 3, **dadurch gekennzeichnet, dass** die Stützrolle (49) der Schneidrolle (25) eine Vielzahl an Nuten (51) aufweist, die Mittel zum Befördern von Luft in die Saugmittel (32) oder aus den Blasmitteln (33) definieren; wobei die Vertiefung (32) eines jeden Blocks (50) eine jeweilige Luftansaug- oder Blasöffnung (39) aufweist, die so ausgebildet ist, dass sie in Fluidkommunikation mit der jeweiligen Nut (51) steht, die Luft in die Saugmittel (32) oder aus den Blasmitteln (33) als Funktion der Position der Vertiefung (32) während der Drehung der Schneidrolle (25) um ihre Drehachse (25a) befördert.

5. Maschine nach einem der vorhergehenden Ansprüche, **dadurch gekennzeichnet, dass** die Formvorrichtung (11) Saugmittel (32) und Blasmittel (33) in Fluidkommunikation mit der ersten und der zweiten Rolle (23, 24) umfasst; die Aufnahmevertiefungen (37) der ersten Rolle (23) weisen jeweilige Lufteinlass- oder Blasöffnungen (41) in Fluidkommunikation mit den Saugmitteln (32) und mit den Blasmittel (33) auf; die Aufnahmevertiefungen (38) der zweiten Rolle (24) weisen jeweilige Lufteinlass- oder Blasöffnungen (42) in Fluidkommunikation mit den Saugmitteln (32) und mit den Blasmitteln (33) auf.

6. Maschine nach Anspruch 5, **dadurch gekennzeichnet, dass** sie eine Steuereinheit (43) umfasst, die konfiguriert ist, um das Ein- und Ausschalten der Saugmittel (32) zu steuern und das Ein- und Ausschalten der Blasmittel (33) zu steuern; wobei die Steuereinheit (43) so konfiguriert ist, dass sie die Saugmittel (32) oder die Blasmittel (33) während des Transports der Formen (23b, 24b) der ersten und zweiten Rolle (23, 24) in die Kupplungsstation (26) einschaltet.

7. Maschine nach Anspruch 6, **dadurch gekennzeichnet, dass** die Steuereinheit (43) konfiguriert ist, um die Saugmittel (32) einzuschalten, bevor die Füllung (4) in die Formen (23b, 24b) der ersten und zweiten Rolle (23, 24) während des Transports in die Kupplungsstation (26) abgegeben wird; die Steuereinheit (43) ist konfiguriert, um die Saugmittel (32) auszuschalten, sobald die Füllung (4) in die Formen (23b, 24b) abgegeben worden ist.

8. Maschine nach Anspruch 7, **dadurch gekennzeichnet, dass** die Steuereinheit (43) konfiguriert ist, um die Blasmittel (33) einzuschalten, wenn die Saugmittel (32) ausgeschaltet sind.

9. Maschine nach Anspruch 6, **dadurch gekennzeichnet, dass** die Steuereinheit (43) ausgebildet ist, um die Blasmittel gleichzeitig mit der Abgabe der Füllung (4) in die Formen (23b, 24b) der ersten und zweiten Rolle (23, 24) während des Transports in die Kupplungsstation (26) einzuschalten.

10. Maschine nach einem der vorhergehenden Ansprüche, **dadurch gekennzeichnet, dass** die erste Rolle (23) und die zweite Rolle (24) jeweils eine Stützrolle (45, 46) umfassen, auf deren Umfangsfläche sie die Formen (23b, 24b) aufweisen, die ausgebildet sind, um an der jeweiligen Stützrolle (45, 46) montiert und von dieser demontiert zu werden.

11. Maschine nach einem der vorhergehenden Ansprüche, **dadurch gekennzeichnet, dass** die Stützrolle (45) der ersten Rolle (23) eine Vielzahl an Nuten (47) aufweist, die Mittel zum Befördern von Luft in die Saugmittel (32) oder aus den Blasmitteln (33) definieren; wobei die Vertiefung (37) einer jeden Form (23b) eine jeweilige Luftansaug- oder Blasöffnung (41) aufweist, die so ausgebildet ist, dass sie in Fluidkommunikation mit der jeweiligen Nut (47) steht, die Luft in die Saugmittel (32) oder aus den Blasmitteln (33) befördert.

12. Maschine nach einem der vorhergehenden Ansprüche, **dadurch gekennzeichnet, dass** die Stützrolle (46) der zweiten Rolle (24) eine Vielzahl an Nuten (48) aufweist, die Mittel zum Befördern von Luft in die Saugmittel (32) oder aus den Blasmitteln (33) definieren; wobei die Vertiefung (38) einer jeden Form (24b) eine jeweilige Luftansaug- oder Blasöffnung (42) aufweist, die so ausgebildet ist, dass sie in Fluidkommunikation mit der jeweiligen Nut (48) steht, die Luft in die Saugmittel (32) oder aus den Blasmitteln (33) befördert.

13. Maschine nach einem der vorhergehenden Ansprüche, **dadurch gekennzeichnet, dass** der Umfangsabschnitt der Presszone (53, 54) der Form (23b, 24b) den Amboss für den jeweiligen damit zusammenwirkenden Schneider (25b) definiert.

14. Maschine nach einem der vorhergehenden Ansprüche, **dadurch gekennzeichnet, dass** sie stromabwärts der Schneidrolle (25) eine Förderstrecke (55) für die Reststücke (7a) der ersten Teigschicht (7) und eine Förderstrecke (56) für die Reststücke (8a) der zweiten Teigschicht (8) umfasst; wobei die Reststücke (7a) der ersten Schicht (7) getrennt von den Reststücken (8a) der zweiten Schicht (8) vorrücken.

## Revendications

1. Machine pour la production de produits de pâtes farcies, comprenant
un premier dispositif d'alimentation (9) servant à alimenter une première couche (7) de pâte à pâtes alimentaires et un second dispositif d'alimentation (10) servant à alimenter une seconde couche (8) de pâte à pâtes alimentaires ;
un dispositif de mise en forme (11), servant à mettre en forme les produits de pâtes farcies (2), situé en aval des premier et second dispositifs d'alimentation (9, 10) en référence à la direction de déroulement des première et seconde couches (7, 8) de pâte à pâtes alimentaires ; le dispositif de mise en forme (11) étant configuré pour faire avancer les première et seconde couches (7, 8) de pâte à pâtes alimentaires et étant aussi configuré, pendant qu'il les fait avancer, pour former les première et seconde couches (7, 8) de manière à recevoir une farce (4) respective et à joindre les première et seconde couches (7, 8) de pâte dans une zone de jonction (6) respective ; le dispositif de mise en forme (11) étant configuré pour couper les première et seconde couches (7, 8), en séparant individuellement chaque produit (2) des première et seconde couches (7, 8) de pâte ; le dispositif de mise en forme (11) comprenant un premier et un second rouleaux d'avancement et de mise en forme (23, 24) pour la première et la seconde couche (7, 8), respectivement, disposés pour se faire face et être tangents l'un à l'autre en correspondance d'un poste de couplage (26) servant à coupler la première et la seconde couche (7, 8) autour d'une farce (4) respective ;
dans laquelle les premier et second rouleaux (23, 24) du dispositif de mise en forme (11) ont chacun sur la surface périphérique des moules (23b, 24b) respectifs servant à mettre en forme les première et seconde couches respectives de pâte (7, 8) de manière à pouvoir recevoir la farce (4) ; les moules (23b, 24b) du premier et du second rouleau (23, 24) comprennent des creux respectifs (37, 38) étant formés pour recevoir les couches respectives de pâte (7, 8) et des zones de pression (53, 54) respectives servant à presser la première et la seconde couche respective de pâte (7, 8) et à entourer le creux (37, 38) respectif ;
**caractérisée en ce que** le dispositif de mise en forme (11) comprend de plus :
un rouleau de coupe (25) agissant conjointement avec l'un ou l'autre des premier ou second rouleaux (23, 24), en particulier avec le second rouleau (24) ; le rouleau de coupe (25) et le rouleau (24) du dispositif de mise en forme (11) avec lequel il agit conjointement, en particulier le second rouleau (24), étant tangents l'un à l'autre en correspondance d'un poste de coupe (35) où chaque produit (2) est séparé de la première et de la seconde couche (7, 8) de pâte ;
dans laquelle le rouleau de coupe (25) comporte sur sa surface périphérique des bords de coupe (25b) respectifs formés pour couper les couches de pâte (7, 8) en correspondance de leur zone de scellement (6) ;
dans laquelle les bords de coupe (25b) sont formés pour correspondre aux moules (24b) du rouleau (24) du dispositif de mise en forme (11) avec lequel il agit conjointement, par rapport, en particulier, aux moules (24b) du second rouleau (24), de manière à les opposer le long du périmètre de la zone de pressage (54) du moule (24b) respectif.

2. Machine selon la revendication indépendante 1, **caractérisée en ce que** le dispositif de mise en forme (11) comprend des moyens d'aspiration (32) et des moyens de soufflage (33) en communication fluidique avec le rouleau de coupe (25) ; le rouleau de coupe (25) comportant sur sa surface périphérique une pluralité de creux (36) servant à retenir un produit (2) respectif et étant pourvu d'au moins une bouche d'aspiration ou de soufflage d'air (39) configurée pour être en communication fluidique avec les moyens d'aspiration (32) et avec les moyens de soufflage (33) en fonction de la position du creux (32) pendant la rotation du rouleau de coupe (25) autour de son axe (25a).

3. Machine selon la revendication 2, **caractérisée en ce que** le rouleau de coupe (25) comprend un rouleau de support (49) comportant sur sa surface périphérique des blocs (50) respectifs configurés pour être assemblés au rouleau de support (49) et désassemblés de celui-ci ; chaque bloc (50) est pourvu du creux (32) susmentionné servant à retenir un produit (2) respectif et comprend un tranchant (25b) respectif entourant le creux (32), formé pour couper les première et seconde couches de pâte (7, 8) en correspondance du poste de coupe (35).

4. Machine selon la revendication 3, **caractérisée en ce que** le rouleau de support (49) du rouleau de coupe (25) comporte une pluralité de rainures (51) définissant des moyens pour acheminer l'air dans les moyens d'aspiration (32) ou hors des moyens de soufflage (33) ; le creux (32) de chaque bloc (50) comportant une bouche d'aspiration ou de soufflage d'air (39) respective configurée pour être en communication fluidique avec la rainure (51) respective qui achemine l'air dans les moyens d'aspiration (32) ou hors des moyens de soufflage (33) en fonction de la position du creux (32) pendant la rotation du rouleau de coupe (25) autour de son axe de rotation (25a) .

5. Machine selon l'une quelconque des revendications précédentes, **caractérisée en ce que** le dispositif de mise en forme (11) comprend des moyens d'aspiration (32) et des moyens de soufflage (33) en communication fluidique avec le premier et le second rouleau (23, 24) ; les creux de réception (37) du premier rouleau (23) comportent des bouches respectives d'entrée d'air ou de soufflage (41) en communication fluidique avec les moyens d'aspiration (32) et avec les moyens de soufflage (33) ; les creux de réception (38) du second rouleau (24) comportent des bouches respectives d'entrée ou de soufflage d'air (42) en communication fluidique avec les moyens d'aspiration (32) et avec les moyens de soufflage (33) .

6. Machine selon la revendication 5, **caractérisée en ce qu'**elle comprend une unité de commande (43) configurée pour commander la mise en marche et l'arrêt des moyens d'aspiration (32) et pour commander la mise en marche et l'arrêt des moyens de soufflage (33) ; l'unité de commande (43) étant configurée pour mettre en marche les moyens d'aspiration (32) ou les moyens de soufflage (33) pendant le transit des moules (23b, 24b) des premier et second rouleaux (23, 24) dans le poste de couplage (26).

7. Machine selon la revendication 6, **caractérisée en ce que** l'unité de commande (43) est configurée pour mettre en marche les moyens d'aspiration (32) avant que la farce (4) ne soit libérée dans les moules (23b, 24b) des premier et second rouleaux (23, 24) en transit dans le poste de couplage (26) ; l'unité de commande (43) est configurée pour arrêter les moyens d'aspiration (32) une fois que la farce (4) a été libérée dans les moules (23b, 24b) .

8. Machine selon la revendication 7, **caractérisée en ce que** l'unité de commande (43) est configurée pour mettre en marche les moyens de soufflage (33) lorsque les moyens d'aspiration (32) sont arrêtés.

9. Machine selon la revendication 6, **caractérisée en ce que** l'unité de commande (43) est configurée pour mettre en marche les moyens d'aspiration (32) dès la libération de la farce (4) dans les moules (23b, 24b) des premier et second rouleaux (23, 24) en transit dans le poste de couplage (26) .

10. Machine selon l'une des revendications précédentes, **caractérisée en ce que** le premier rouleau (23) et le second rouleau (24) comprennent chacun un rouleau de support (45, 46) respectif comportant sur sa surface périphérique les moules (23b, 24b) configurés pour être assemblés au rouleau de support (45, 46) respectif et désassemblés de celui-ci.

11. Machine selon l'une des revendications précédentes, **caractérisée en ce que** le rouleau de support (45) du premier rouleau (23) comporte une pluralité de rainures (47) définissant des moyens pour acheminer l'air dans les moyens d'aspiration (32) ou hors des moyens de soufflage (33) ; le creux (37) de chaque moule (23b) comportant une bouche d'aspiration ou de soufflage d'air (41) respective configurée pour être en communication fluidique avec la rainure (47) respective qui achemine l'air dans les moyens d'aspiration (32) ou hors des moyens de soufflage (33).

12. Machine selon l'une des revendications précédentes, **caractérisée en ce que** le rouleau de support (46) du second rouleau (24) comporte une pluralité de rainures (48) définissant des moyens pour acheminer l'air dans les moyens d'aspiration (32) ou hors des moyens de soufflage (33) ; le creux (38) de chaque moule (24b) comportant une bouche d'aspiration ou de soufflage d'air (42) respective configurée pour être en communication fluidique avec la rainure (48) respective qui achemine l'air dans les moyens d'aspiration (32) ou hors des moyens de soufflage (33).

13. Machine selon l'une des revendications précédentes, **caractérisée en ce que** la partie périphérique de la zone de pressage (53, 54) du moule (23b, 24b) définit l'enclume pour le tranchant (25b) respectif agissant conjointement avec celle-ci.

14. Machine selon l'une des revendications précédentes, **caractérisée en ce qu'**elle comprend, en aval du rouleau de coupe (25), une ligne de d'acheminement (55) pour les chutes (7a) de la première couche de pâte (7) et une ligne d'acheminement (56) pour les chutes (8a) de la seconde couche de pâte (8) ; les chutes (7a) de la première couche (7) avançant séparément des chutes (8a) de la seconde couche (8).
